# EUROPÄISCHE PATENTANMELDUNG

(11) **EP 1 229 710 A1**
(43) Veröffentlichungstag der Anmeldung: **07.08.2002**
(21) Anmeldenummer: 01102497.3
(22) Anmeldetag: 05.02.2001
(51) Int. Cl.: H04M 11/02

(54) **Hausinstallationseinrichtung**

(71) Anmelder: Schneider + Fichtel GmbH, 72108 Rottenburg a.N. (DE)
(72) Erfinder: Schneider, Rolf A.O., 72108 Rottenburg (DE)
(74) Vertreter: Dallmeyer, Georg, Dipl.-Ing.

(57) **Zusammenfassung**

Bei einer Hausinstallationseinrichtung für den Eingangsbereich eines Gebäudes mit einer Eingangstür (1), mit mindestens einer Kommunikationseinrichtung, z.B. einer Wechselsprechanlage, und/oder mit mindestens einer Funktionseinrichtung, z.B. eine Türöffnungseinrichtung, die in einer Bedienkonsole angeordnet sind, ist vorgesehen, dass die Bedienkonsole (6) aus einem Glaskörper mit einer Glasoberfläche besteht, wobei Kommunikationselemente der mindestens einen Kommunikationseinrichtung und/oder Funktionselemente der mindestens einen Funktionseinrichtung in die Bedienkonsole (6) aus Glas integriert sind.

## Beschreibung

Die Erfindung betrifft eine Hausinstallationseinrichtung für den Eingangsbereich eines Gebäudes mit einer Eingangstür, mit mindestens einer Kommunikationseinrichtung, z.B. einer Wechselsprechanlage, und/oder mit mindestens einer Funktionseinrichtung, z.B. eine Türöffnungseinrichtung, die in einer Bedienkonsole angeordnet sind.

Derartige Hausinstallationseinrichtungen sind in der Regel im Eingangsbereich eines Gebäudes neben einer Eingangstür angeordnet. Es ist bereits bekannt, die Kommunikations- und Funktionseinrichtungen in einer Bedienkonsole modular zusammenzufassen, die von einem Rahmen umgeben ist. Die Bedienkonsole weist dabei beispielsweise eine Klingelanlage, Wechselsprecheinrichtung und ggf. auch eine Videoanlage auf.

Der Erfindung liegt die Aufgabe zugrunde, eine Hausinstallationseinrichtung der eingangs genannten Art zu schaffen, die insbesondere dafür geeignet ist in Glasflächen eines Eingangsbereiches eines Gebäudes integriert zu werden.

Zur Lösung dieser Aufgabe dienen erfindungsgemäß die Merkmale des Anspruchs 1.

Die Erfindung sieht in vorteilhafter Weise vor, dass die Bedienkonsole aus einem Glaskörper besteht, wobei Kommunikationselemente der mindestens einen Kommunikationseinrichtung und/oder Funktionselemente der mindestens einen Funktionseinrichtung und/oder eine Beleuchtungseinrichtung in die Bedienkonsole aus Glas integriert sind. Eine derartige Bedienkonsole aus Glas kann als Glaselement neben einer Eingangstür in einem Türseitenteil, oder losgelöst von einem Türelement an einer anderen Stelle im Eingangsbereich angeordnet sein.

Vorzugsweise ist vorgesehen, dass die Bedienkonsole ganz aus transparentem Glas besteht.

Die Bedienkonsole kann auch als lichtdurchlässiges isolierendes Element in eine Eingangstür integriert sein.

Besonders vorteilhaft ist die Integration der Bedienkonsole in eine Eingangstür aus Glas.

Bei einer Eingangstüre aus Glas sind stromleitende transparente Flächen für die Stromversorgung der Bedienkonsole auf den Glasflächen der Eingangstüre vorgesehen. Die transparenten stromleitenden Flächen bestehen beispielsweise aus ITO-Beschichtungen, wie sie in der EP-A-0 995 199 beschrieben sind.

Als Kommunikationseinrichtung kann eine audiovisionelle Überwachungseinrichtung mit einer Videokamera und einem Mikrofon vorgesehen sein. Mit Hilfe dieser Kommunikationseinrichtung kann die Anwesenheit einer Person an eine Kontrollzentrale oder an eine beliebige Stelle im Gebäude z.B. per Funk gemeldet werden. Beispielsweise können Video- und Audiosignale per Funk an eine Empfangsstation oder eine Überwachungseinrichtung übertragen werden.

Die Funktionseinrichtung kann beispielsweise eine Türöffnungseinrichtung aufweisen. Eine solche Türöffnungseinrichtung kann aus einer kombiniert mechanisch-elektronischen Schließanlage bestehen, wobei die in die Bedienkonsole integrierte Türöffnungseinrichtung einen Transponder für ein Codeschloss aufweisen kann. Desweiteren kann die Bedienkonsole eine Tastatur für das Codeschloss aufweisen.

Die Tastatur ist vorzugsweise eine Glastastatur, die für das Codeschloss und für andere Eingabefunktionen einer Funktions- oder Kommunikationseinrichtung verwendet werden kann. Eine derartige Glastastatur besteht beispielsweise aus einer transparenten Trägerscheibe und einer transparenten Dünnglasscheibe, die jeweils elektrisch leitend transparent beschichtet sind, und die bei Druckausübung auf die Dünnglasscheibe durch Kontakt eine Schaltfunktion ausführen. Die Bedienkonsole kann eine freiprogrammierbare Tastatur zur Steuerung der Kommunikationseinrichtung und/oder Funktionseinrichtung aufweisen. Dazu kann die bereits zuvor erwähnte Glastastatur verwendet werden. Eine solche Glastastatur ist beispielsweise in der WO 99/46788 beschrieben.

Die Bedienkonsole kann ferner einen Bewegungsmelder aufweisen, der der mindestens einen Kommunikationseinrichtung und/oder der mindestens einen Funktionseinrichtung die Anwesenheit einer Person meldet und/oder eine Beleuchtungseinrichtung steuert. Mit Hilfe des Bewegungsmelders kann die Anwesenheit einer Person an eine Kontrollzentrale oder an eine beliebige Stelle im Gebäude, z.B. per Funk gemeldet werden. Der Bewegungsmelder kann beispielsweise dazu verwendet werden, die audiovisionelle Kommunikationseinrichtung bzw. Überwachungseinrichtung oder eine Beleuchtungseinrichtung einzuschalten. Die Beleuchtungseinrichtungen können im Eingangsbereich vorgesehen sein oder auch in der Bedienkonsole. Beispielsweise eigenen sich insbesondere LED-Dioden für die Beleuchtung der Bedienkonsole oder von Funktionssymbolen der Bedienkonsole aus Glas. Außerdem kann die Beleuchtungseinrichtung nur als gestaltendes Element eingesetzt werden.

Desweiteren können die Beleuchtungseinrichtungen auch von einem Dämmerungsschalter ein- bzw. ausgeschaltet werden.

Die Bedienkonsole kann desweiteren ein Personenidentifikationssystem enthalten. Beispielsweise kann eine Personenidentifikation mit Hilfe der audiovisionellen Kommunikationseinrichtung realisierbar sein oder aus einem Sensor zum Erfassen von Fingerabdrücken bestehen, der in die Glasoberfläche der Bedienkonsole integriert sein kann.

Die Kommunikationseinrichtungen und Funktionseinrichtungen der Bedienkonsole können modulartig zusammengesetzt sein, wozu die Bedienkonsole in miteinander kombinierbare Glassegmente unterteilt sein kann.

Die Bedienkonsole kann desweiteren einen Monitor, z.B. einen LCD- oder TFT-Bildschirm, für eine audiovisionelle Kommunikationseinrichtung aufweisen.

Die Glasoberfläche der Bedienkonsole kann zusätzlich als Schallübertrager verwendet werden, indem die Glasoberfläche an einen Schallwandler angekoppelt wird.

Im folgenden werden unter Bezugnahme auf die Zeichnungen, Ausführungsbeispiele der Erfindung näher erläutert.

Es zeigen:
- Fig. 1: eine Hausinstallationseinrichtung, die im Eingangsbereich eines Gebäudes neben einer Eingangstür angeordnet ist, und
- Fig. 2: eine Hausinstallationseinrichtung mit einer Konsole aus Glas, die im Eingangsbereich eines Gebäudes installiert werden kann.

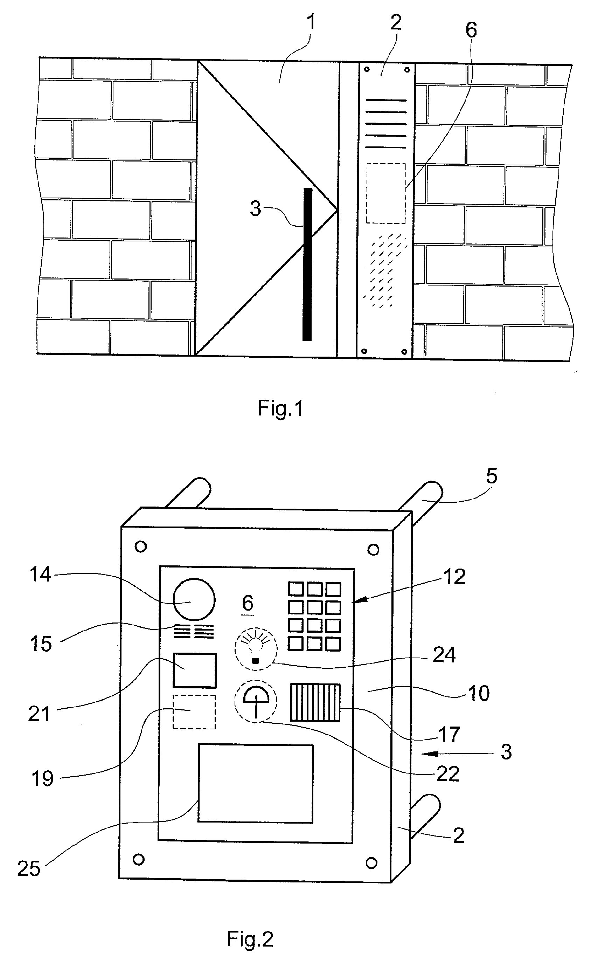

Fig. 1 zeigt eine Eingangstür 1 eines Gebäudes, die aus Glas oder einem anderen Material bestehen kann. In einem Seitenteil 2 ist eine Bedienkonsole 6 angeordnet, die aus einem Glaskörper mit einer Glasoberfläche besteht. Verschiedene Kommunikationselemente mindestens einer Kommunikationseinrichtung und/oder mehrere Funktionselemente von mindestens einer Funktionseinrichtung sind in die Bedienkonsole 6 aus Glas integriert.

Das Seitenteil 2 der Eingangstüre 1 kann vollständig aus Glas gebildet sein und die Bedienkonsole 6 in sich aufnehmen, kann aber beispielsweise auch aus Edelstahl gebildet sein, wobei die Bedienkonsole 6 als isolierendes und transparentes lichtdurchlässiges Element in das Seitenteil 2 eingelassen ist.

Die Bedienkonsole 6 kann auch separat von der Eingangstüre 1 an der Hauswand befestigt sein oder auf einem eigenen Gestell im Vorfeld der Eingangstür angeordnet sein.

Fig. 2 zeigt eine Bedienkonsole 6 aus Glas, die von einem Rahmen 10, z.B. aus Edelstahl gehalten wird. Mit Hilfe der Halterung 5 kann die Bedienkonsole 6 an einem Gestell oder an einer Wand oder an der Eingangstür selbst befestigt sein.

Die einzelnen Kommunikationseinrichtungen bestehen beispielsweise aus einer Wechselsprecheinrichtung oder aus einer audiovisionellen Überwachungseinrichtung mit einer Videokamera 14 und einem Mikrofon 15. Die Kommunikationseinrichtungen können mit einem Bewegungsmelder 17 aktiviert werden, wobei der Bewegungsmelder auch außerhalb der Bedienkonsole 6 angeordnet sein kann.

Die Funktionseinrichtungen für Türfunktionen können beispielsweise aus einer Klingeleinrichtung, einer Türöffnungseinrichtung oder einer kombiniert mechanisch/elektronischen Schließanlage bestehen.

Eine derartige kombiniert mechanisch/elektronischen Schließanlage kann ein Codeschloss aufweisen, wobei ein Transponder für dieses Codeschloss in die Bedienkonsole 6 integriert sein kann.

Die Türöffnungseinrichtung bzw. die Schließanlage kann auch mit einem Personenidentifikationssystem gekoppelt sein, wobei das Personenidentifikationssystem aus einer audiovisionellen Personenerkennungsanlage oder einem Fingerabdruck-Sensorsystem 21 bestehen kann.

Beide Personenidentifikationssysteme sind geeignet für eine Integration in die Bedienkonsole 6 aus Glas.

Die Bedienkonsole 6 aus Glas ist vorzugsweise aus mindestens zwei Glasschichten, nämlich einer Trägerglasscheibe und einer Deckglasscheibe aus Dünnglas gebildet, die auf den sich gegenüberliegenden Seiten transparent elektrisch leitend beschichtet sind, so dass die Deckglasscheibe aus Dünnglas als transparente, in Verbindung mit einer Steuerung frei programmierbare Tastaturfläche genutzt werden kann. Die Deckglasscheibe aus Dünnglas kontaktiert bei Druckbeaufschlagung die darunter liegende Trägerglasscheibe und stellt dadurch einen Kontakt her, der innerhalb der Tastaturfläche lokalisiert werden kann und somit bestimmten Funktionen zugeordnet werden kann.

Die Bedienkonsole 6 zeigt einen in die Glasoberfläche integrierten Klingelknopf 22 als Beispiel einer Funktionseinrichtung. Das Symbol für die Funktions- oder Kommunikationseinrichtungen kann auf die Glasoberfläche der Bedienkonsole 6 aufgedruckt sein. Selbstverständlich enthält die Glasfläche eine Vielzahl von anderen Funktionsflächen, beispielsweise auch eine Zehnertastatur 12, mit der ein Codeschloss betätigt werden kann oder mit der andere Kommunikations- und Funktionseinrichtungen angesteuert werden können.

Die Glasoberfläche der Bedienkonsole kann auch mit einem Schallwandler 19 gekoppelt sein, so dass die gesamte Glasoberfläche der Bedienkonsole als Schallübertrager, z.B. für eine Wechselsprecheinrichtung, verwendet werden kann.

Die Bedienkonsole 6 kann auch eine Videokamera 14 aufnehmen, die aufgrund ihrer Integration in die Glasfläche von außen, insbesondere bei getöntem Glas, nicht ohne weiteres erkennbar ist. Die Bedienkonsole 6 kann auch mit Infrarotbeleuchtungsmittel versehen sein, um eine unbemerkte Beleuchtung für die Videokamera 14 vorzusehen.

Auf der Bedienkonsole 6 sind lediglich zwei Symbole, nämlich für eine Beleuchtungstaste 24 und eine Klingeltaste 22, stellvertretend für weitere Bedienungsfelder dargestellt. Die Symbole können entweder aufgedruckt sein oder durch eine entsprechende LED-Beleuchtung in die Bedienkonsole 6 aus Glas integriert sein.

## Patentansprüche

1. Hausinstallationseinrichtung für den Eingangsbereich eines Gebäudes mit einer Eingangstür (1), mit mindestens einer Kommunikationseinrichtung, z.B. einer Wechselsprechanlage, und/oder mit mindestens einer Funktionseinrichtung, z.B. eine Türöffnungseinrichtung, die in einer Bedienkonsole angeordnet sind,
**dadurch gekennzeichnet,**
**dass** die Bedienkonsole (6) aus einem Glaskörper mit einer Glasoberfläche besteht, wobei Kommunikationselemente der mindestens einen Kommunikationseinrichtung und/oder Funktionselemente der mindestens einen Funktionseinrichtung und/oder eine Beleuchtungseinrichtung in die Bedienkonsole (6) aus Glas integriert sind.

2. Hausinstallationseinrichtung nach Anspruch 1, **dadurch gekennzeichnet, dass** die Bedienkonsole (6) im Eingangsbereich neben der Eingangstür angeordnet ist.

3. Hausinstallationseinrichtung nach Anspruch 1, **dadurch gekennzeichnet, dass** die Bedienkonsole (6) als lichtdurchlässiges und isolierendes Element in eine Eingangstür (1) integriert ist.

4. Hausinstallationseinrichtung nach Anspruch 1, **dadurch gekennzeichnet, dass** die Bedienkonsole in einen Türgriff (3) einer Eingangstür (1) integriert ist.

5. Hausinstallationseinrichtung nach einem der Ansprüche 1 bis 4, **dadurch gekennzeichnet, dass** die Bedienkonsole (6) ganz aus transparentem Glas besteht.

6. Hausinstallationseinrichtung nach Anspruch 3, **dadurch gekennzeichnet, dass** die Bedienkonsole (6) in eine Eingangstür (1) aus Glas integriert ist.

7. Hausinstallationseinrichtung nach Anspruch 6, **dadurch gekennzeichnet, dass** die Eingangstüre (1) aus Glas stromleitende transparente Flächen für die Stromversorgung der mindestens einen Kommunikationseinrichtung und/oder der mindestens einen Funktionseinrichtung und/oder von Beleuchtungseinrichtungen aufweist.

8. Hausinstallationseinrichtung nach einem der Ansprüche 1 bis 7, **dadurch gekennzeichnet, dass** die mindestens eine Kommunikationseinrichtung aus einer Wechselsprecheinrichtung besteht.

9. Hausinstallationseinrichtung nach einem der Ansprüche 1 bis 8, **dadurch gekennzeichnet, dass** die mindestens eine Kommunikationseinrichtung aus einer audiovisionellen Überwachungseinrichtung (14,15) besteht.

10. Hausinstallationseinrichtung nach einem der Ansprüche 1 bis 9, **dadurch gekennzeichnet, dass** die mindestens eine Funktionseinrichtung aus einer Türöffnungseinrichtung besteht.

11. Hausinstallationseinrichtung nach Anspruch 10, **dadurch gekennzeichnet, dass** die Türöffnungseinrichtung einen Transponder für ein Codeschloss aufweist.

12. Hausinstallationseinrichtung nach Anspruch 11, **dadurch gekennzeichnet, dass** die Bedienkonsole (6) eine Zehnertastatur (12) für das Codeschloss aufweist.

13. Hausinstallationseinrichtung nach einem der Ansprüche 1 bis 12, **dadurch gekennzeichnet, dass** die Bedienkonsole (6) einen Bewegungsmelder (17) aufweist, der der mindestens einen Kommunikationseinrichtung und/oder der mindestens einen Funktionseinrichtung die Anwesenheit einer Person meldet und/oder eine Beleuchtungseinrichtung steuert.

14. Hausinstallationseinrichtung nach einem der Ansprüche 1 bis 13, **dadurch gekennzeichnet, dass** die Bedienkonsole (6) aus Glas eine integrierte Beleuchtungseinrichtung aufweist.

15. Hausinstallationseinrichtung nach Anspruch 14, **dadurch gekennzeichnet, dass** die Beleuchtungseinrichtung von einem Dämmerungsschalter ein- bzw. ausschaltbar ist.

16. Hausinstallationseinrichtung nach einem der Ansprüche 11 bis 15, **dadurch gekennzeichnet, dass** die Bedienkonsole (6) aus Glas eine Glastastatur (12) für das Codeschloss aufweist.

17. Hausinstallationseinrichtung nach einem der Ansprüche 1 bis 16, **dadurch gekennzeichnet, dass** die Bedienkonsole (6) ein Personenidentifikationssystem enthält.

18. Hausinstallationseinrichtung nach Anspruch 17, **dadurch gekennzeichnet, dass** das Personenidentifikationssystem aus einem Sensor (21) zum Erfassen von Fingerabdrücken besteht.

19. Hausinstallationseinrichtung nach Anspruch 18, **dadurch gekennzeichnet, dass** der Sensor (21) in die Bedienkonsole (6) aus Glas integriert ist.

20. Hausinstallationseinrichtung nach Anspruch 1 bis 19, **dadurch gekennzeichnet, dass** die Kommunikationseinrichtungen und die Funktionseinrichtungen modulartig in die Bedienkonsole (6) integrierbar sind.

21. Hausinstallationseinrichtung nach einem der Ansprüche 1 bis 20, **dadurch gekennzeichnet, dass** die Bedienkonsole (6) eine frei programmierbare Tastatur zur Steuerung der Kommunikationseinrichtungen und/oder Funktionseinrichtungen aufweist.

22. Hausinstallationseinrichtung nach einem der Ansprüche 8 bis 17, **dadurch gekennzeichnet, dass** die Bedienkonsole (6) aus Glas einen Monitor (25) für eine audiovisionelle Kommunikationseinrichtung oder Überwachungseinrichtung (14,15) aufweist.

23. Hausinstallationseinrichtung nach einem der Ansprüche 1 bis 22, **dadurch gekennzeichnet, dass** die Glasoberfläche der Bedienkonsole (6) mit einem Schallwandler (19) gekoppelt ist und als Schallübertrager verwendet wird.
